# EUROPEAN PATENT APPLICATION

(11) **EP 4 703 846 A1**
(43) Date of publication of application: **04.03.2026**
(21) Application number: 24197082.1
(22) Date of filing: 28.08.2024
(51) Int. Cl.: G06F 1/3228, G06F 1/3246, G06F 1/3203

(54) **POWER CONTROL METHOD**

(71) Applicant: British Telecommunications Public Limited Company, London E1 8EE (GB)
(72) Inventor: The designation of the inventor has not yet been filed
(74) Representative: British Telecommunications public limited company Intellectual Property Department

(57) **Abstract**

There is herein described, a computer-implemented method for causing an action to be performed in relation to a device external to the computer, the method comprising periodically scanning a database to obtain timing information, from which a date and/or time at which the action is to be performed is derivable, at the date and/or time at which the action is to be performed, obtaining (i) an identifier, from which an identity of the device is derivable; and (ii) action information, from which an action that is to be performed in relation to the device is derivable; and using the obtained identifier and action information to cause the action to be performed in relation to the device.

## Description

The use of general compute servers in the telecommunications industry is increasing. These servers can be used, for example, to host virtualised and software-based networking functions.

When idle, these servers still consume a significant amount of power (-60% of their maximum power capacity). This represents a significant waste of energy. In production environments, there is a need for the server to be available for use at all times. It takes several minutes to power on a server so it is able to handle load on the network. As a result of this servers in production environments tend to be left in a power-on state at all times. They are therefore readily available to handle the network load 24/7.

Development and test environments, however, do not always require the server to be available 24/7. It would be desirable, for reasons of cost-saving, to power down the servers in these environments when not in use.

It would be desirable to provide a method in which some and/or all of the above-mentioned and/or other disadvantages of the prior art are overcome or substantially mitigated.

According to a first aspect of the invention there is provided a computer-implemented method for causing an action to be performed in relation to a device external to the computer, the method comprising:
periodically scanning a database to obtain timing information, from which a date and/or time at which the action is to be performed is derivable,
at the date and/or time at which the action is to be performed, obtaining:
   (i) an identifier, from which an identity of the device is derivable; and
   (ii) action information, from which an action that is to be performed in relation to the device is derivable; and
using the obtained identifier and action information to cause the action to be performed in relation to the device.

The identifier and/or the action information may be obtained from the database. The action may be to ensure the device is powered-on or powered-off. A plurality of power-on or power-off actions may be derivable from the action information. In these embodiments, the timing information may comprise a date and/or time at which each of the plurality of actions may be performed. The method may be performed in relation to further devices.

The device may be a server and may be a general compute server. The method may further comprise receiving the timing information and/or the identifier and/or the action information input into the database by a user using a graphical user interface running a web application.

The step of periodically scanning the database to obtain timing information may be performed by a cron script. The step of periodically scanning the database to obtain timing information may be performed with a frequency greater than once per hour, and may be performed with a frequency greater than once every ten minutes, and is preferably performed with a frequency of once per minute. The identifier may be a serial number of the device. The cron script may be a daemon that runs continuously in the background.

The timing information may be the date and/or time at which the action is to be performed. For example, every day, the device is to be powered-on at 9am.

The cron script may use the timing information to create or update a cron job. The cron job may derive, from the timing information, the date and/or time at which the action is to be performed, and at that date and/or time, may send an instruction to the device to perform the action. The instruction may be sent by a power script that is run by the cron job. The instruction may be an IPMI (intelligent platform management interface) command.

The power script may perform the step of obtaining the identifier and action information. The power script may first check a power state of the device and send the instruction to device to perform the action only if the action is required. In embodiments where the device is a server, the power script may send the instruction to the Baseband Management Controller of the server.

According to a second aspect of the invention there is provided a computer system adapted to cause an action to be performed in relation to a device external to the computer, the computer system being further adapted to:
periodically scan a database to obtain timing information, from which a date and/or time at which the action is to be performed is derivable,
at the date and/or time at which the action is to be performed, obtaining:
   (i) an identifier, from which an identity of the device is derivable; and
   (ii) action information, from which an action that is to be performed in relation to the device is derivable; and
use the obtained identifier and action information to cause the action to be performed in relation to the device.

A specific embodiment of the invention will now be described in detail, for illustration only, with reference to the appended drawings, in which:
Fig 1 is a schematic representation of apparatus according to the invention;
Fig 2 is a flow chart showing the main steps of the method according to the invention.

In the presently-described embodiment, a user wishes to automate power control for one or more electronic devices. In the present embodiment the device is a single server.

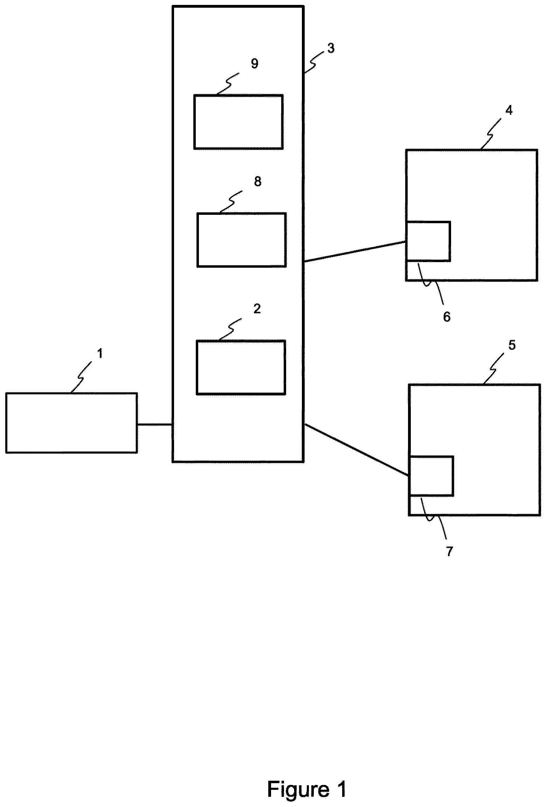

Fig 1 shows a graphical use interface (GUI) 1. Using the GUI 1, a user is able to access a web application. The web application enables the user to add information relating to a server 4, 5 or other device that the user wishes to power control, into tables 2, 8 and 9 in a database 3.

In particular, the user inputs identity information relating to the server into table 2. The user inputs a schedule containing an action to be performed in relation to the server, (e.g. switching on or off at a particular time of day) into table 8. Table 9 is a bridging table which links servers to devices.

The presently-described embodiment of the invention involves the use of cron jobs. As the skilled person would understand, cron is a daemon that can be used to schedule commands to run at specific dates and times. This is achieved by running cron jobs at the scheduled time.

In the present embodiment, a cron update script runs continuously. The script sleeps until the time is between 56 and 58 seconds past each minute. The cron update script then scans the database for any schedules that, within the last minute have either been added to the database or updated and overwrites a list of all the cron jobs based on the current set of schedules in the database.

From the schedule, a given cron job determines the next date and time that a change should be made to the power status of the server. In this embodiment the schedule only refers to one server, however the schedule could refer to more than one server (or other device). When that date and time arrives, the cron job runs a power control script. The power control script contains the identity of the schedule in its argument.

The power control script scans the database, locates the schedule and obtains from it the action to be performed in relation to the server(s) (i.e. power on or power off). The power control script then obtains the identities and credentials of the server(s) to which the schedule is to be applied. It will be necessary to perform a decryption procedure to obtain this information from the database. Such procedures would be familiar to the skilled person and will not be described here.

The power control script then checks the power status of the server. It achieves this by sending an IPMI (intelligent platform management interface) command to the BMC (baseboard management controller) of a server, requesting the power status of the server. These terms are explained in the following paragraph.

As the skilled person would understand, a BMC is a component of a server that is always on even when the host operating system is powered off. This allows the server to be configured and controlled remotely even when powered off. IPMI (intelligent platform management interface) is a protocol for communicating with the BMC of a server programmatically. An IPMI command can be used to send a request to the server BMC to check the power state of the server and send a power on/off request to change the power state of the server.

Returning to the present embodiment, the BMC 6 of server 4 returns the current power status of server 4. If server 4 is not in the power state required by the schedule at that particular date and time, the power control script sends an IPMI command to the BMC 6 of server 4, instructing server 4 to change its power status. The bridging table 2 in the database 3 is updated to reflect the current power status of server 4.

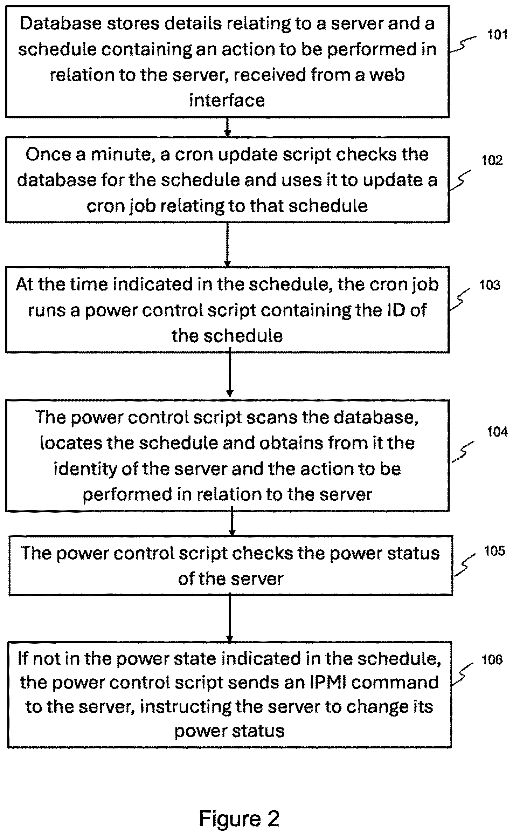

Fig 2 is a flow chart showing the main steps of the method according to the invention. In particular:
At step 101, a database stores details relating to a server and a schedule containing an action to be performed in relation to the server, received from a web interface;
At step 102, once a minute, a cron update script checks the database for the schedule and uses it to update a cron job relating to that schedule;
At step 103, at the time indicated in the schedule, the cron job runs a power control script containing the ID of the schedule;
At step 104, the power control script scans the database 3, locates the schedule and obtains from it the identity of the server 4 and the action to be performed in relation to the server 4;
At step 105, the power control script checks the power status of the server;
At step 106, if not in the power state indicated in the schedule, the power control script sends an IPMI command to the server 4, instructing the server 4 to change its power status.

## Claims

1. A computer-implemented method for causing an action to be performed in relation to a device external to the computer, the method comprising:
periodically scanning a database to obtain timing information, from which a date and/or time at which the action is to be performed is derivable,
at the date and/or time at which the action is to be performed, obtaining:
(iii) an identifier, from which an identity of the device is derivable; and
(iv) action information, from which the action that is to be performed is derivable; and
using the obtained identifier and action information to cause the action to be performed in relation to the device.

2. A method as claimed in claim 1, wherein the identifier and/or the action information is obtained from the database.

3. A method as claimed in claim 1 or claim 2, wherein the action is to ensure the device is powered-on or powered-off.

4. A method as claimed in any preceding claim, wherein the device is a general compute server.

5. A method as claimed in any preceding claim, wherein the step of periodically scanning the database to obtain timing information is performed with a frequency of once per minute.

6. A method as claimed in any preceding claim, wherein the step of periodically scanning the database to obtain timing information is performed by a cron script.

7. A method as claimed in claim 6, wherein the cron script uses the timing information to create or update a cron job.

8. A method as claimed in claim 7, wherein the cron job derives, from the timing information, the date and/or time at which the action is to be performed, and at that date and/or time, sends an instruction to the device to perform the action.

9. A method as claimed in claim 8, wherein the cron job runs a power script which sends the instruction.

10. A method as claimed in claim 9, wherein the instruction is an IPMI (intelligent platform management interface) command.

11. A computer system adapted to cause an action to be performed in relation to a device external to the computer, the computer system being further adapted to:
periodically scanning a database to obtain timing information, from which a date and/or time at which the action is to be performed is derivable,
at the date and/or time at which the action is to be performed, obtaining:
(iii) an identifier, from which an identity of the device is derivable; and
(iv) action information, from which the action that is to be performed is derivable; and
use the obtained identifier and action information to cause the action to be performed in relation to the device.

12. A computer program comprising instructions which, when the program is executed by a computer, cause the computer to carry out the steps of any of claims 1 to 10.

13. A computer-readable carrier medium comprising the computer program of claim 12.
